# EUROPÄISCHE PATENTSCHRIFT

(11) **EP 0 447 684 B1**
(45) Veröffentlichungstag und Bekanntmachung des Hinweises auf die Patenterteilung: **08.03.1995**
(21) Anmeldenummer: 90125834.3
(22) Anmeldetag: 31.12.1990
(51) Int. Cl.: A63B 55/08

(54) **Faltbarer Golf-Wagen**
Collapsible golf trolley
Chariot de golf pliable

(30) Priorität: 21.03.1990 DE 4009015
(43) Veröffentlichungstag der Anmeldung: 25.09.1991
(73) Patentinhaber: Kiffe, Horst-Gregor, Dipl.- Ing., D-78048 Villingen-Schwenningen (DE)
(72) Erfinder: Kiffe, Horst-Gregor, Dipl.- Ing., D-78048 Villingen-Schwenningen (DE)
(74) Vertreter: Patentanwälte Westphal, Buchner, Mussgnug Neunert, Göhring

(56) Entgegenhaltungen:
- US-A- 2 903 082
- US-A- 4 106 583
- PATENT ABSTRACTS OF JAPAN vol. 7, no. 271 (M-260)(1416) 3. Dezember 1983& JP-A-58 149 801 (MATSUSHITA DENKI SANGYO KK ) 6. September 1983

## Beschreibung

Die Erfindung betrifft einen faltbaren Golf-Wagen nach dem Oberbegriff des Anspruchs 1.

Zum Transport der Golftaschen mit den verschiedenen beim Golfspiel mitgeführten Schlägern werden wegen des relativ hohen Gewichtes vorzugsweise elektromotorisch angetriebene Wagen verwendet.

Aus DE 84 26 522 U1 ist ein dreirädriger Golf-Wagen mit einem Vorderrad und zwei elektromotorisch angetriebenen Hinterrädern bekannt. Da das Vorderrad hierbei in einer feststehenden Radgabel gelagert ist, muß der Golf-Wagen zum Steuern mit dem Vorderrad vom Boden abgehoben werden, was für den Benutzer umständlich und teilweise kraftaufwendig ist. Außerdem ist der wagen relativ sperrig, so daß er schlecht transportabel ist und unverhältnismäßig viel Platz bei der Aufbewahrung beansprucht.

Aus DE 86 19 830 U1 ist ein Golf-Wagen bekannt, bei welchem die Lenkstange und ein Stützbein für ein einzelnes Rad zum Zwecke der Aufbewahrung bzw. des Transportes weggeklappt bzw. demontiert werden können. Bei diesem Wagen ist das einzelne Rad in einer drehbaren Radgabel gelagert und in Bezug auf zwei angetriebene Räder im Fahrbetrieb nachlaufend, was sich als nachteilig in der Handhabung beim Überfahren von Bodenunebenheiten bzw. Schwellen erwiesen hat.

In der Handhabung zweckmäßiger ist der Golf-Wagen nach US 4 106 583, bei welchem ein einzelnes Vorderrad an einer abgewinkelten, drehbaren Radgabel gelagert ist und der batteriegespeiste Motorantrieb auf zwei Hinterräder wirkt. Dieser Golf-Wagen ist zwar faltbar, nimmt jedoch im zusammengefalteten Zustand noch zu viel Platz in Anspruch. Außerdem ist die Anordnung der schweren Batterie sowohl im Hinblick auf die Zusammenfaltbarkeit als auch die Fahreigenschaft und Stabilität ungünstig.

Der vorliegenden Erfindung liegt die Aufgabe zugrunde, diesen im Oberbegriff des Anspruchs 1 genannten Golf-Wagen so zu verbessern, daß er möglichst vollständig zu einem kompakten Paket zusammengefaltet werden kann und dennoch bessere Fahreigenschaften besitzt, so daß er gut lenkbar ist und auch zum Befahren von Böschungen und Überfahren von Schwellen ohne weiteres geeignet ist.

Gelöst wird diese Aufgabe mit den in Anspruch 1 angegebenen Merkmalen.

Vorteilhafte Weiterbildungen der Erfindung sind mit den Unteransprüchen gekennzeichnet.

Der erfindungsgemäße Golf-Wagen ist durch die nach hinten abgewinkelte, drehbare Radgabel des Vorderrades besonders gut lenkbar und bei Verwendung der auf beide Hinterräder wirkenden Bremseinrichtung insbesondere zum Befahren von Böschungen gut geeignet.

In vorteilhafter Weiterbildung weist die Radgabel einen Nachlauf auf, wodurch sich das Vorderrad weitgehend selbsttätig zum Geradeauslauf zurückstellt.

Gleichfalls positiv auf die Fahreigenschaften wirkt sich aus, wenn das Fahrgestell möglichst verwindungssteif ausgeführt ist. Dies kann durch die Verbindung eines vorderen und eines hinteren Rahmenteiles, die vorzugsweise aus Aluminiumdruckguß bestehen, über stabile Streben erreicht werden.

In vorteilhafter Weiterbildung umschließt das hintere Rahmenteil die Antriebseinheit mit Elektromotor, Getriebe und Steuerelektronik sowie die Bremseinrichtung und die Hinterachse, wodurch diese gegen Verschmutzung und Beschädigung geschützt sind. Gleichfalls ist dadurch eine gute Geräuschdämmung gewährleistet.

Zur Betätigung der Bremseinrichtung ist vorzugsweise ein über einen Bremshebel bedienbarer Bowdenzug vorgesehen, der die beiden Hinterradbremsen gleichzeitig derart betätigt, daß unabhängig vom Bremsenverschleiß auf beide Hinterräder ein gleichmäßiger Bremsdruck wirkt.

Der erfindungsgemäße Golf-Wagen ist zum Transport leicht zusammenklappbar. Das Einladen in den Kofferraum eines Personenkraftwagens wird durch zwei Traggriffe erleichtert.

Die Erfindung ist nachstehend anhand eines besonders bevorzugten Ausführungsbeispiels, das in der Zeichnung dargestellt ist, näher erläutert. Darin zeigen
- Figur 1: eine perspektivische Ansicht eines erfindungsgemäßen Golf-Wagens,
- Figur 2: eine Seitenansicht des Wagens gemäß Figur 1 ohne Golftasche und ohne Batterie,
- Figur 3: eine vergrößerte Seitenansicht des Wagens gemäß Figur 2 im zusammengeklappten Zustand,
- Figur 4: eine Aufsicht des Wagens gemäß Figur 1 ohne Golftasche,
- Figur 5: eine vergrößerte Seitenansicht des Fahrgestells gemäß Figur 3,
- Figur 6: eine vergrößerte Seitenansicht entsprechend Figur 5 einer Fahrgestellvariante,
- Figur 7: einen vergrößerten Schnitt durch die Hinterachse des Wagens gemäß Figur 1,
- Figur 8: einen Schnitt entsprechend demjenigen nach Figur 7 durch die Hinterachse des Wagens nach einem zweiten Ausführungsbeispiel,
- Figur 9: Teiluntenansicht des Wagens nach Figur 8 in Richtung IX gesehen und
- Figur 10: Teilansicht, teilweise geschnitten, in Richtung X-X in Figur 8 gesehen.

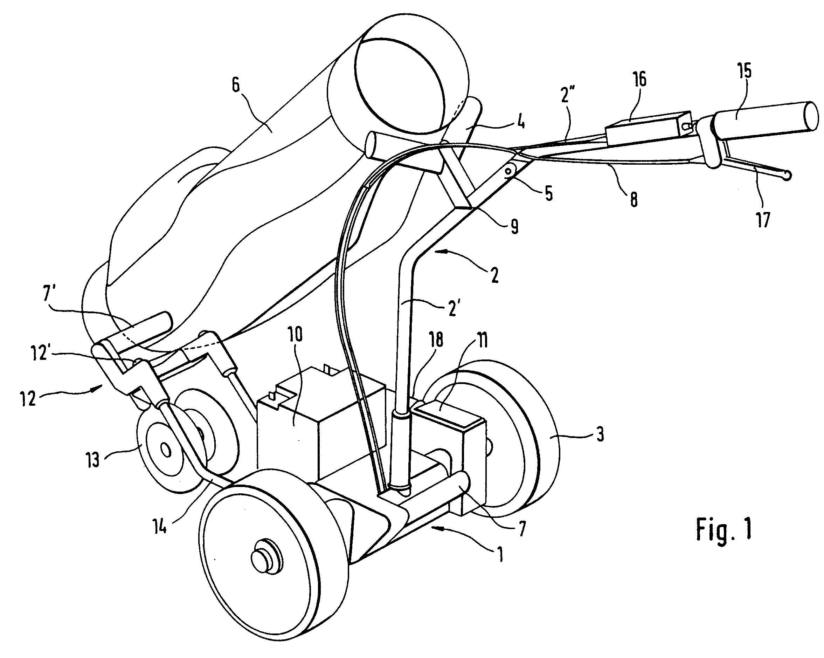

Der Golf-Wagen gemäß Figur 1 weist ein Fahrgestell mit einem vorderen Rahmenteil 12 und einem hinteren Rahmenteil 1 auf, die über zwei stabile Streben 14 miteinander verbunden sind. Beide Rahmenteile 1, 12 bestehen aus Aluminium-Druckguß, während die Streben 14 als Stahlrohre ausgebildet sind. Am hinteren Rahmenteil 1 sind zwei Hinterräder 3 vorgesehen, die von einem Elektromotor 18 über ein Getriebe 11 angetrieben sind. Am vorderen Rahmenteil 12 ist ein Vorderrad 13 gelagert. Als Energiequelle dient eine wiederaufladbare Batterie 10, beispielsweise eine Trockenbatterie, die etwa im Schwerpunkt des Fahrgestells angeordnet ist.

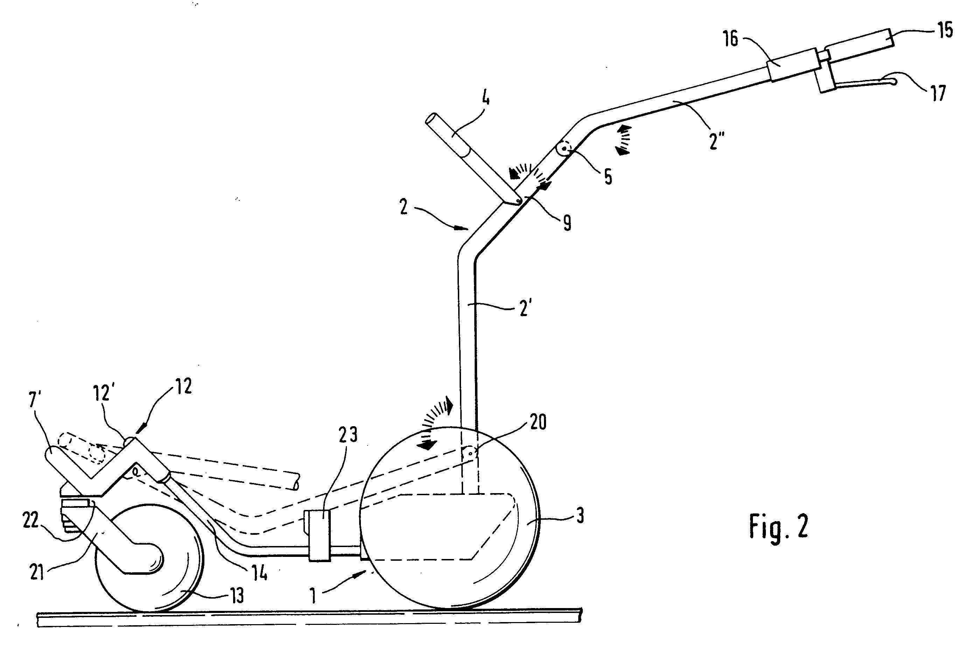

An den beiden Rahmenteilen 12, 1 sind vorn und hinten jeweils Traggriffe 7' bzw. 7 vorgesehen, welche mit einem aus Weichgummi oder dgl. gepolsterten Material (Softgrip) bestehenden Griffteil überzogen sind. Vor dem hinteren Traggriff 7 ist am hinteren Rahmenteil 1 eine Lenkstange 2 mit einem unteren Lenkerteil 2' und einem oberen Lenkerteil 2'' angeordnet. Das untere Lenkerteil 2' ist - wie in Figur 2 erkennbar - am hinteren Rahmenteil 1 mittels eines Klappgelenkes 20 festgelegt. Beim Zusammenbau des Wagens wird das untere Lenkerteil 2' in seiner senkrechten Stellung gemäß Figur 2 fixiert. In seiner oberen Hälfte ist das untere Lenkerteil 2' schräg nach hinten entgegen der Fahrtrichtung abgebogen. Das obere Lenkerteil 2'' ist mit dem Ende des unteren Lenkerteils 2' gleichfalls über ein Klappgelenk 5 verbunden. Das Klappgelenk 5 läßt sich in verschiedenen Winkelstellungen der beiden Lenkerteile 2', 2'' zueinander feststellen. Dadurch kann die Höhe der Lenkstange 2 auf eine bequeme Griffhöhe für den Benutzer eingestellt werden.

Am oberen Ende des oberen Lenkerteils 2'' ist ein aus Weichgummi bestehender Handgriff 15 zusammen mit einem Bremshebel 17 für eine Bowdenzugbremse vorgesehen, wie dies z.B. auch bei Zweiradfahrzeugen üblich ist. Vor dem Handgriff 15 ist am oberen Lenkerteil 2'' ferner ein Schaltorgan 16 angeordnet, mit dem sich verschiedene Fahrgeschwindigkeiten einstellen lassen. In alternativer, in der Zeichnung nicht dargestellter Weise kann das Schaltorgan auch mit dem Handgriff kombiniert sein, so daß eine Geschwindigkeitsregulierung durch eine Verdrehung des Handgriffs möglich ist. Vom Bremshebel 17 führt ein Bowdenzug 8 zusammen mit dem elektrischen Anschlußkabel für das Schaltorgan nach unten zum hinteren Rahmenteil 1.

Am unteren Lenkerteil 2' ist zwischen dem Klappgelenk 5 und der Biegung des Lenkerteils 2' eine Strebe mit einem Haltebügel 4 an einem weiteren Klappgelenk 9 festgelegt. An dem V-förmig oder U-förmig gebogenen Haltebügel 4 ist eine Golftasche 6 in ihrem oberen Bereich befestigt. Das untere Ende der Golftasche 6 liegt auf dem vorderen Rahmenteil 12 auf, wobei der gepolsterte Traggriff 7', Gumminoppen 12' und die gepolsterten Haltebügel 4 als Stoßdämpfer wirken.

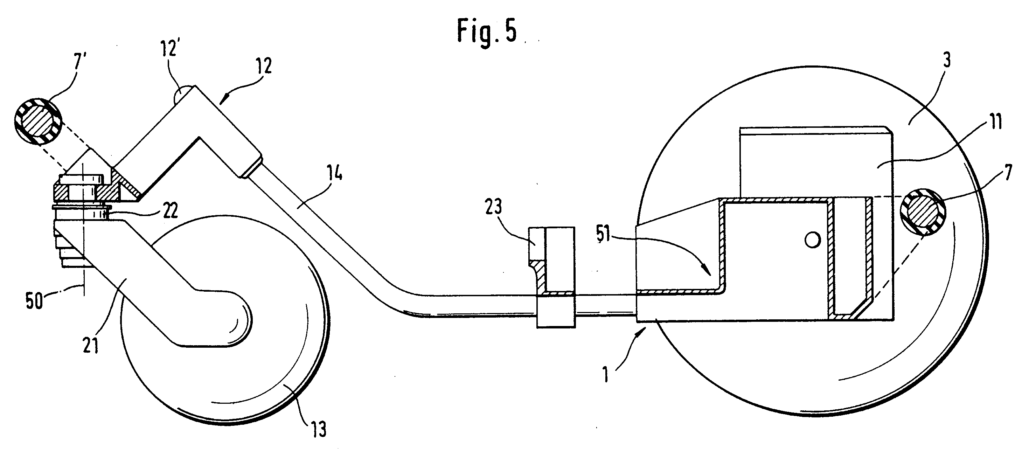

Wie in Figur 5 erkennbar, verlaufen die Streben 14 im hinteren Bereich waagrecht und sind im vorderen Bereich schräg nach oben gebogen.

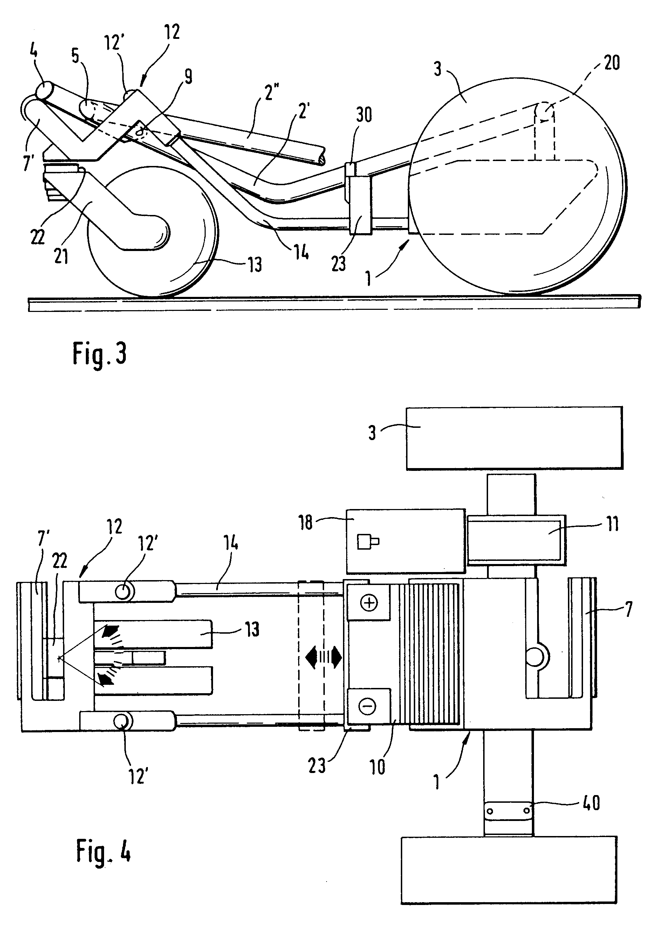

Die beiden Streben 14 enden in einem L-förmigen Ansatz, der an das vordere Rahmenteil 12 so angeformt ist, daß beide Schenkel schräg nach unten weisen. Im vorderen Bereich des vorderen Rahmenteils 12 ist unterhalb des schräg nach oben vorstehenden Traggriffs 7' ein Drehlager 22 vorgesehen, an dem eine Radgabel 21 drehbar gelagert ist. Die Radgabel 21 ist zur Verbesserung der Lenkeigenschaften schräg nach hinten abgewinkelt. An der Radgabel 21 ist das Vorderrad 13 gelagert, das gemäß Figur 4 als Zwillingsrad ausgebildet ist. Die Radgabel 21 weist einen Nachlauf auf, d.h. die Drehachse 50 des Drehlagers ist gegenüber der Vertikalen leicht in Fahrtrichtung geneigt. Dadurch ergibt sich eine gewisse Rückstellwirkung des Vorderrades nach dem Durchfahren von Kurven.

Am vorderen Ende des hinteren Rahmenteils 1 ist ein rechtwinkliger Vorsprung 51 angeformt. Dieser Vorsprung dient der Aufnahme der Batterie 10, die mit ihrem anderen Ende auf einem auf den beiden Streben 14 verschiebbaren Batteriehalter 23 aufliegt. Da der Batteriehalter verschiebbar ist, ist der Einbau von Batterien verschiedener Größe möglich, z.B. einer Batterie mit 12 V und 36 Ah oder 44 Ah.

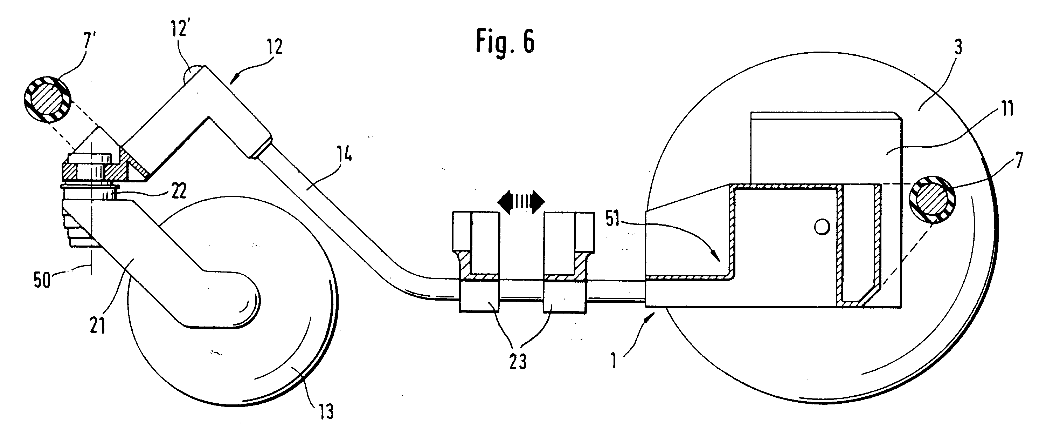

Nach der Abwandlung gemäß Figur 6 kann ein zweiter verschiebbarer Halter 23' vorgesehen sein. Durch Verschieben der beiden Batteriehalter 23 und 23' kann die Position der in diese eingesetzten Batterie bezüglich des Wagens und damit der Schwerpunkt nach vorn verlagert werden. Dies ist bei Einsatz des Wagens auf steilen Golfplatz-Strecken von Vorteil.

Der Wagen ist für den Transport z.B. im Kofferraum eines Personenkraftwagens leicht zusammenlegbar. Gemäß Figur 3 kann hierzu das untere Lenkerteil 2' nach vorn und das obere Lenkerteil 2'' nach hinten geklappt werden. Da auch der Haltebügel 4 für die Golftasche 6 klappbar ausgebildet ist, kann das gesamte Gestänge platzsparend auf dem Fahrgestell zusammengeklappt werden. Zur Fixierung des unteren Lenkerteils 2' am Fahrgestell ist an den Batteriehalter 23 eine Klammer 30 angeformt, die mit dem unteren Lenkerteil 2' verrastbar ist. Die Traggriffe 7, 7' erleichtern die Handhabung im zusammengeklappten Zustand.

Die Anordnung der verschiedenen Aggregate am Fahrgestell ist aus Figur 4 ersichtlich. Neben der Batterie 10, die etwa im Schwerpunkt des Fahrgestells am vorderen Ende des hinteren Rahmenteils 1 angeordnet ist, sind der Elektromotor 18 und hinter diesem das Getriebe 11 vorgesehen. Auf der gegenüberliegenden Seite ist an der Oberseite des hinteren Rahmenteils 1 ferner eine Sitzaufnahme 40 vorgesehen, auf der ein Ruhesitz befestigt werden kann, falls dies in Ausnahmefällen erwünscht ist.

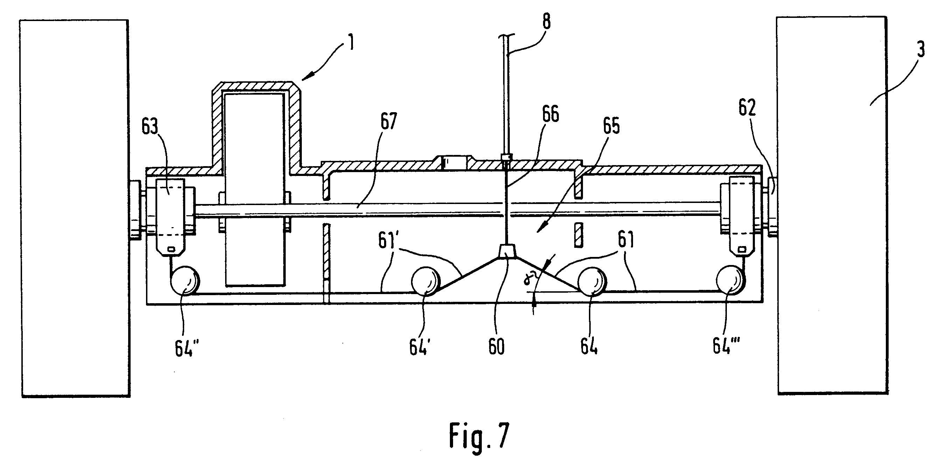

Die beiden Hinterräder 3 sind gemäß Figur 7 an einer starren Hinterachse 67 mit Radlagern 62 gelagert. Die als Bowdenzugbremse ausgebildete Bremseinrichtung 65 für die Hinterräder besteht im wesentlichen aus Bandbremsen 63 an jedem Hinterrad 3, die mittels des Bowdenzuges 8 betätigt werden können. Der Bowdenzug 8 ist mit seiner Hülle am hinteren Rahmenteil 1 befestigt. Sein Seilzug 66 endet in einer Schelle 60, durch welche zur gleichzeitigen Betätigung der beiden Bandbremsen 63 der aus den Abschnitten 61, 61' bestehende über Umlenkrollen umgelenkte Bremsenseilzug hindurchgeführt ist. Da der Bremsenseilzug gegenüber der Schelle 60 verschiebbar ist, paßt sich die Länge der Seilzugabschnitte 61, 61' bei Verschleiß der Bandbremsen 63 an. Bei ungleichmäßigem Verschleiß ergeben sich für die Seilzugabschnitte 61 bzw. 61' unterschiedliche Zugwinkel α, was zu unterschiedlichen Zugkräften führt. Durch diese Maßnahme ist stets ein gleichmäßiges Bremsen gewährleistet.

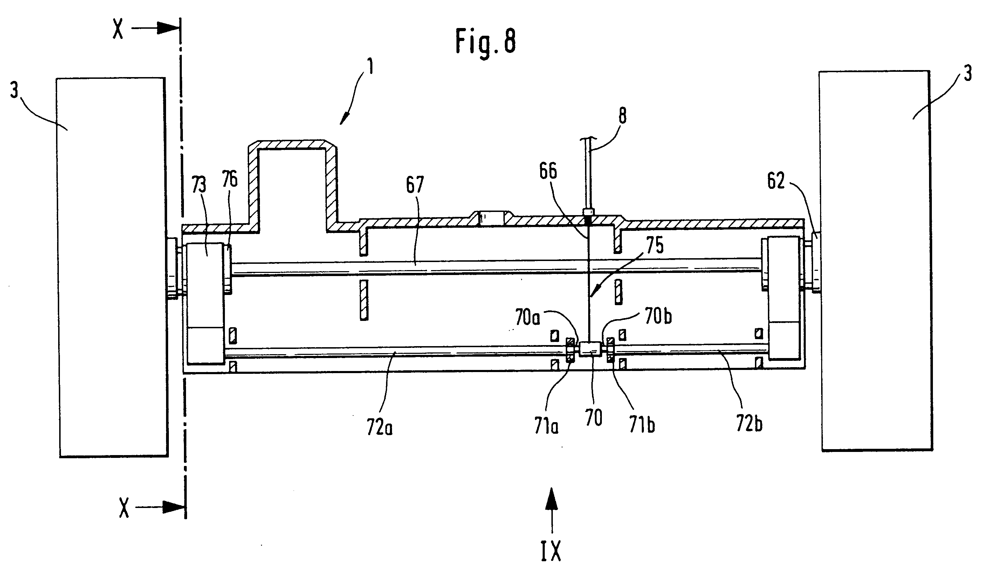

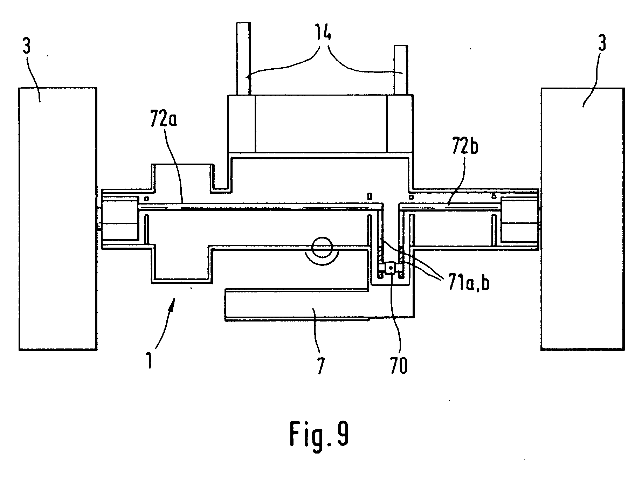

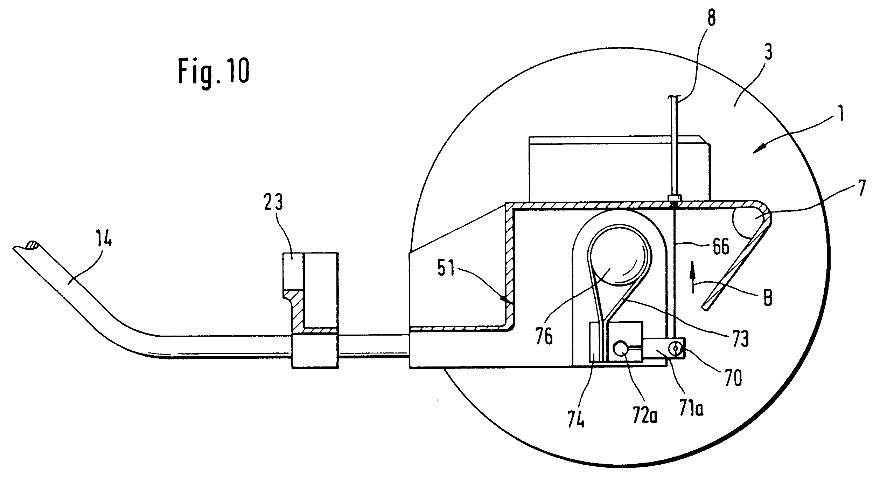

Bei dem mit den Figuren 8 bis 10 veranschaulichten zweiten Ausführungsbeispiel des erfindungsgemäßen Wagens ist eine etwas anders gestaltete Bremseinrichtung 75 vorgesehen. Soweit Teile und Konstruktionselemente mit denjenigen des ersten Ausführungsbeispieles gemäß Figur 1 bis 7 übereinstimmen, sind gleiche Bezugszeichen verwendet. Insoweit wird auf die vorstehende Beschreibung hingewiesen. Auch bei dem zweiten Ausführungsbeispiel wird die auf die Hinterräder 3 einwirkende Bremskraft mittels eines Bowdenzuges 8 mit Seilzug 66 übertragen. Das freie Ende des Seilzuges 66 ist zentral mit einem Achsstück 70 verbunden, welches drehbeweglich zwischen den Hebelarmen 71a, b gelagert ist. Die Hebelarme 71a, b ihrerseits sind mit den beiden Teilstücken der Bremsachse 72a, b drehfest verbunden. Wie vor allem die Seitenansicht in Figur 10 erkennen läßt, ist jeweils ein Teilstück der Bremsachse 72a bzw. b über ein Klemmstück 74 mit den Enden des Bremsbandes 73 fest verbunden. Dieses Bremsband 73 umschlingt die Bremstrommel 76, welche ihrerseits drehfest mit der Hinterachse 67 und damit den Hinterrädern 3 verbunden ist. Die Betätigung der Bremse hat zur Folge, daß der Seilzug 66 in Richtung des Seiles B in Figur 10 zurückgezogen wird und hierdurch vermittels der Hebelarme 71a, b auf die Bremsachsenteilstücke 72a, b eine in Figur 10 im Gegenuhrzeigersinn gerichtete Drehbewegung übertragen wird. Dies bewirkt, daß über die Klemmstücke 74 auf die Bremsbänder 73 eine Zugkraft übertragen wird, wodurch der Reibwiderstand zwischen den Bremsbändern 73 und den Bremstrommeln 76 erhöht und damit der Wagen abgebremst wird.

Zum Ausgleich ungleichmäßigen Bremsenverschleisses sind die Bremsachsenteilstücke 72a, b unabhängig voneinander drehgelagert und nur über das Achsstück 70 derart miteinander lose gekoppelt, daß die Hebelarme 71a und 71b gegeneinander eine Winkelstellung einnehmen können. Das kann z.B. dadurch erreicht werden, daß der Durchmesser der zylindrischen Ansätze 70a, b des Achsstückes 70 kleiner als derjenige der die Ansätze aufnehmenden Bohrungen in den Hebelarmen 71a, b dimensioniert ist.

Der Elektromotor 18, das Getriebe 11, die Steuerelektronik zur Steuerung des Elektromotors sowie die Bremseinrichtung 65 und die Hinterachse 67 sind vom hinteren Rahmenteil 1 umschlossen, so daß diese gegen Beschädigungen bzw. sonstigen Umwelteinflüsse geschützt sind.

Die Steuerelektronik weist eine Tiefentladesperre auf, welche die Stromzufuhr bei Erreichen einer vorgegebenen Mindestspannung der Batterie unterbricht. Dadurch wird eine Beschädigung der Batterie durch zu starke Entladung vermieden.

### Figurenlegende

- 1: hinteres Rahmenteil
- 2: Lenkstange
- 2': unteres Lenkerteil
- 2'': oberes Lenkerteil
- 3: Hinterrad
- 4: Haltebügel
- 5: Klappgelenk
- 6: Golftasche
- 7, 7': Traggriff
- 8: Bowdenzug
- 9: Klappgelenk
- 10: Batterie
- 11: Getriebe
- 12: vorderes Rahmenteil
- 12': Gumminoppen
- 13: Vorderrad
- 14: Strebe
- 15: Handgriff
- 16: Steuerorgan
- 17: Bremshebel
- 18: Elektromotor
- 20: Klappgelenk
- 21: Radgabel
- 22: Drehlager
- 23, 23': Batteriehalter
- 30: Klammer
- 40: Sitzaufnahme
- 50: Drehachse
- 51: Vorsprung
- 60: Schelle
- 61, 61': Seilzug
- 62: Radlager
- 63: Bandbremse
- 64, 64', 64'', 64''': Umlenkrolle
- 65: Bremseinrichtung
- 66: Seilzug
- 67: Hinterachse
- 70: Achsstück
- 70a, b: Ansätze des Achsstückes
- 71a, b: Hebelarme
- 72a, b: Bremsachsenteilstücke
- 73: Bremsband
- 74: Klemmstück
- 75: Bremseinrichtung
- 76: Bremstrommel

## Patentansprüche

1. Faltbarer Golf-Wagen mit einem Fahrgestell, an dem ein an einer abgewinkelten, drehbaren Radgabel gelagertes Vorderrad und zwei von einer elektrischen Antriebseinheit angetriebene Hinterräder vorgesehen sind, mit einer aufladbaren Batterie mit einer Halterung für eine Golftasche zur Aufnahme von Golfschlägern und mit einem nach hinten, entgegen der Fahrtrichtung geneigten, Lenkgestänge, dadurch gekennzeichnet,
daß das Fahrgestell ein hinteres Rahmenteil (1) und ein vorderes Rahmenteil (12) aufweist, die über zwei Streben (14) starr miteinander verbunden sind, daß die Batterie (10) etwa im Schwerpunkt des Fahrgestells zwischen dem hinteren Rahmenteil (1) und einem auf den beiden Streben (14) verstellbaren Batteriehalter (23) befestigt ist und daß das Lenkgestänge eine zweiteilige Lenkstange (2) mit einem unteren Lenkerteil (2') und einem oberen Lenkerteil (2'') aufweist, daß die beiden Lenkerteile (2', 2'') miteinander über ein feststellbares Klappgelenk (5) und das untere Lenkerteil (2') mit dem hinteren Rahmenteil (1) mittels eines feststellbaren Klappgelenks (20) verbunden sind.

2. Golf-Wagen nach Anspruch 1, dadurch gekennzeichnet, daß zur Halterung der Batterie (10) zwei in Fahrtrichtung auf den beiden Streben (14) verstellbare Batteriehalter (23, 23') vorgesehen sind.

3. Golf-Wagen nach Anspruch 1 oder 2, dadurch gekennzeichnet, daß die Antriebseinheit mit Elektromotor (18), Getriebe (11), einer Steuerelektronik sowie eine Bremseinrichtung (65, 75) für beide Hinterräder und Hinterachse (67) vom hinteren Rahmenteil (1) umschlossen sind.

4. Golf-Wagen nach Anspruch 1, 2 oder 3, dadurch gekennzeichnet, daß das hintere Rahmenteil (1) und/oder das vordere Rahmenteil (12) aus Aluminium-Druckguß bestehen.

5. Golf-Wagen nach einem der vorhergehenden Ansprüche, dadurch gekennzeichnet, daß zur Halterung der Golftasche (6) ein Haltebügel (4) vorgesehen ist, der mit einem Klappgelenk (9) am unteren Lenkerteil (2') festgelegt ist.

6. Golf-Wagen nach einem der vorhergehenden Ansprüche, dadurch gekennzeichnet, daß das am vorderen Rahmenteil (12) und am hinteren Rahmenteil (1) Traggriffe (7, 7') vorgesehen sind.

7. Golf-Wagen nach Anspruch 6, dadurch gekennzeichnet, daß der vordere Traggriff (7, 7') und die Haltebügel (4) mit Überzügen und das vordere Rahmenteil (12) mit Noppen (12'), vorzugsweise aus Gummi, versehen sind, auf welchen die Golftasche (6) aufliegt.

8. Golf-Wagen nach einem der vorhergehenden Ansprüche, dadurch gekennzeichnet, daß an der Radgabel (21) ein Zwillingsrad (13) vorgesehen ist, wobei die Drehachse (50) des Drehlagers der Radgabel (21) gegenüber der Vertikalen leicht in Fahrtrichtung geneigt ist.

9. Golf-Wagen nach Anspruch 8, dadurch gekennzeichnet, daß am Lenkgestänge ein Handgriff (15) mit einem Bremshebel (17) angeordnet ist, mit welchem die Bremseinrichtung (65, 75) mittels eines Bowdenzuges (8) betätigbar ist.

10. Golf-Wagen nach Anspruch 9, dadurch gekennzeichnet, daß die Hülle des Bowdenzuges (8) am hinteren Rahmenteil (1) festgelegt ist und ihr Seilzug (66) mit einer Schelle (60) verbunden ist, durch welche ein Seilzug (61, 61'), der auf an den beiden Hinterrädern (3) vorgesehene Bandbremsen (63) wirkt, kraftschlüssig aber verschiebbar hindurchgeführt und über Umlenkrollen (64, 64', 64'', 64''') derart geführt ist, daß durch Anziehen des Bowdenzuges (8) mittels des Bremshebels (17) die Bandbremsen (63) gleichzeitig betätigbar sind.

11. Golf-Wagen nach Anspruch 9, dadurch gekennzeichnet, daß die Hülle des Bowdenzuges (8) am hinteren Rahmenteil (1) festgelegt ist und ihr Seilzug (66) vorzugsweise über ein drehbewegliches Achsstück (70) kraftschlüssig mit an einer Bremsachse (72a, b) vorgesehenen Hebelarmen (71a, b) verbunden ist und daß an den äußeren Enden der Bremsachse (72a, b) Bremsbänder (73), welche mit der Hinterachse (67) drehbar verbundene Bremstrommeln (76) umschlingen, derart angeordnet sind, daß bei Verdrehung der Bremsachse (72a, b) auf die Hinterachse (67) und damit auf die Hinterräder (3) eine Bremskraft übertragen wird.

12. Golf-Wagen nach Anspruch 11, dadurch gekennzeichnet, daß die beiden Teilstücke (72a, b) der Bremsachse jeweils drehfest mit einem Hebelarm (71a, b) verbunden und miteinander über ein lose gelagertes Achsstück (70) derart verkoppelt sind, daß zum Ausgleich ungleichmäßigen Bremsenverschleisses die Bremsachsenteilstücke (72a, b) bei Bremsenbetätigung unterschiedliche Drehwinkel einnehmen können.

13. Golf-Wagen nach einem der vorhergehenden Ansprüche, dadurch gekennzeichnet, daß am oberen Lenkerteil (2'') ein Steuerorgan (16) zur Steuerung des Elektromotors (18) vorgesehen ist.

14. Golf-Wagen nach einem der vorhergehenden Ansprüche, gekennzeichnet durch eine Steuerelektronik mit einer Tiefentladesperrschaltung, mittels welcher die Stromzufuhr bei Erreichen einer vorgegebenen Mindestspannung der Batterie (10) unterbrochen wird.

## Claims

1. A collapsible golf trolley having a chassis, to which a front wheel mounted on a bent rotatable wheel fork and two rear wheels driven by an electric driving unit are provided, having a chargeable battery with a support for a golf bag for containing golf clubs and having a steering linkage rearwardly inclined against the direction of travel,
**characterised in that** the chassis comprises a rear frame part (1) and a front frame part (12), which are rigidly connected to one another via two struts (14),
**in that** the battery (10) is fixed roughly in the centre of gravity of the chassis between the rear frame part (1) and a battery holder (23) which can be adjusted on the two struts (14),
**and in that** the steering linkage comprises a two-part steering rod (2) having a lower steering part (2') and an upper steering part (2''),
**in that** the two steering parts (2', 2'') are connected to one another via a fixable folding joint (5) and the lower steering part (2') is connected to the rear frame part (1) by means of a fixable folding joint (20).

2. A golf trolley according to Claim 1,
**characterised in that** two adjustable battery holders (23, 23'), which can move in the direction of travel on the two struts (14), are provided to hold the battery (10).

3. A golf trolley according to Claim 1 or 2,
**characterised in that** the driving unit having electric motor (18), transmission (11), control electronics and also a braking mechanism (65, 75) for two rear wheels and rear axle (67) are enclosed by the rear frame part (1).

4. A golf trolley according to Claim 1, 2 or 3,
**characterised in that** the rear frame part (1) and/or the front frame part (12) are made from aluminium diecasting.

5. A golf trolley according to one of the preceding Claims,
**characterised in that** a support bracket (4), which is fixed with a folding joint (9) to the lower steering part (2'), is provided to retain the golf bag (6).

6. A golf trolley according to one of the preceding Claims,
**characterised in that** carrying handles (7, 7') are provided on the front frame part (12) and on the rear frame part (1).

7. A golf trolley according to Claim 6,
**characterised in that** the front carrying handle (7, 7') and the support bracket (4) are provided with coverings and the front frame part (12) is provided with knobs (12'), preferably made from rubber, on which the golf bag (6) lies.

8. A golf trolley according to one of the preceding Claims,
**characterised in that** a twin wheel (13) is provided on the wheel fork (21), with the axis of rotation (50) of the pivot bearing of the wheel fork (21) being inclined slightly in the direction of travel in relation to the vertical.

9. A golf trolley according to Claim 8,
**characterised in that** a handle (15) having a brake lever (17), with which the braking mechanism (65, 75) can be operated by means of a Bowden cable (8), is provided on the steering linkage.

10. A golf trolley according to Claim 9,
**characterised in that** the casing of the Bowden cable (8) is fixed to the rear frame part (1) and its sheathed cable (66) is connected to a clip (60), through which a sheathed cable (61, 61'), which acts on band brakes (63) provided on the two rear wheels (3), is frictionally but displaceably passed and is guided via deflection pulleys (64, 64', 64'', 64''') so that the band brakes (63) can be simultaneously operated by tightening the Bowden cable (8) by means of the brake lever (17).

11. A golf trolley according to Claim 9,
**characterised in that** the casing of the Bowden cable (8) is fixed to the rear frame part (1) and its sheathed cable (66) is frictionally connected to lever arms (71a, b) provided at a brake axle (72a, b) preferably via a rotating axle piece (70),
**and in that** brake bands (73), which with the rear axle (67) loop rotatably connected brake drums (76), are disposed at the outer ends of the braking axle (72a, b) so that with the rotation of the braking axle (72a, b) a braking force is transmitted to the rear axle (67) and thus to the rear wheels (3).

12. A golf trolley according to Claim 11,
**characterised in that** the two sections (72a, b) of the braking axle are connected in a rotationally secure manner to a lever arm (71a, b) and are coupled together via a loosely mounted axle piece (70), so that the braking axle sections (72a, b) can assume various angles of rotation to compensate for uneven wear to the brakes.

13. A golf trolley according to one of the preceding Claims,
**characterised in that** a control device (16) for controlling the electric motor (18) is provided on the upper steering part (2'').

14. A golf trolley according to one of the preceding Claims,
**characterised by** control electronics having a total discharge locking circuit, by means of which the supply of current is interrupted when a predetermined minimum voltage of the battery (10) has been reached.

## Revendications

1. Voiture de golf pliante, sur laquelle sont prévus une roue avant montée sur une fourche coudée, et qui peut tourner et deux roues arrière entraînées par un ensemble électrique d'entraînement, avec une batterie rechargeable, avec un support pour un sac de golf servant à recevoir des clubs de golf et avec une colonne de direction inclinée vers l'arrière en sens inverse du sens de marche, voiture de golf caractérisée en ce que le châssis du véhicule présente une partie arrière (1) et une partie avant (12) qui sont reliées au moyen de deux longerons l'une avec l'autre de façon rigide, en ce que la batterie (10) est fixée à peu près au centre de gravité du châssis du véhicule entre la partie arrière (1) et un support de batterie (23) réglable sur les deux longerons (14) et en ce que la colonne de direction présente une tige en deux parties (2) avec une partie inférieure de guidon (2') et une partie supérieure de guidon (2''), en ce que les deux parties de guidon (2', 2'') sont reliées l'une à l'autre par l'intermédiaire d'une articulation de pliage (5) qui peut être bloquée et la partie inférieure de guidon (2') est reliée à la partie arrière du châssis (1) au moyen d'une articulation de pliage (20) qui peut être bloquée.

2. Voiture de golf selon la revendication 1, caractérisée en ce que l'on prévoit pour fixer la batterie (10) deux supports de batterie réglables (23, 23') dans le sens de la marche sur les deux longerons (14).

3. Voiture de golf selon la revendication 1 ou 2, caractérisée en ce que l'ensemble d'entraînement avec le moteur électrique (18), la transmission (11), une électronique de commande ainsi qu'un dispositif de freinage (65, 75) pour les deux roues arrière et l'essieu arrière 67) sont entourés par la partie arrière (1) du châssis.

4. Voiture de golf selon la revendication 1, 2 ou 3, caractérisée en ce que la partie arrière (1) et/ou la partie avant (12) du châssis est en aluminium coulé.

5. Voiture de golf selon l'une des revendications précédentes, caractérisée en ce que pour fixer le sac de golf (6) on prévoit un étrier de fixation (4) qui est fixé avec une articulation de pliage (9) sur la partie inférieure du guidon (2').

6. Voiture de golf selon l'une des revendications précédentes, caractérisée en ce que l'on prévoit sur la partie avant du châssis (12) et sur la partie arrière du châssis (1) des poignées de transport (7, 7').

7. Voiture de golf selon la revendication 6, caractérisée en ce que la poignée de transport avant (7, 7') et l'étrier de fixation (4) sont pourvus de revêtements et la partie avant du châssis (12) est pourvue de nopes 12' qui sont de préférence en caoutchouc, sur lesquels repose le sac de golf (6).

8. Voiture de golf selon l'une des revendications précédentes, caractérisée en ce que l'on prévoit sur la fourche (21) des roues jumelées (13), l'axe de rotation (50) du palier de rotation de la fourche de roue (21) étant légèrement incliné par rapport à la verticale dans le sens de la marche.

9. Voiture de golf selon la revendication 8, caractérisée en ce que sur la colonne de direction est disposée une poignée (15) avec un levier de frein (17), avec lequel on peut actionner le dispositif de freinage (65, 75) au moyen d'un câble Bowden.

10. Voiture de golf selon la revendication 9, caractérisée en ce que la gaine de câble Bowden (8) est fixée sur la partie arrière (1) du châssis et son câble (66) est relié à une agrafe de serrage (60), à travers laquelle un câble (61, 61'), qui agit sur les deux freins à ruban (63) prévus sur les deux roues arrière (3), passe en frottant mais en pouvant coulisser et passe sur des poulies de renvoi (64, 64', 64'', 64''') de telle façon que les freins à ruban (63) puissent être actionnés en même temps en tirant le câble Bowden (8) au moyen du levier de frein (17)

11. Voiture de golf selon la revendication 9 caractérisée en ce que la gaine du câble Bowden (8) est fixée sur la partie arrière (1) du châssis et son câble (66) est relié de préférence au moyen d'un morceau d'axe (70) pouvant tourner par une liaison à friction à des bras de levier (71a, b) prévus sur un axe de frein (72a, b) et en ce qu'aux extrémités extérieures de l'axe de frein (72a, b) sont disposés des rubans de frein (73) qui enserrent des tambours de frein (76) reliés de façon à pouvoir tourner avec l'essieu arrière (67) de telle façon que lors de la rotation de l'axe de frein (72a, b) soit transmise une force de freinage à l'essieu arrière (67) et de cette façon aux roues arrière (3).

12. Voiture de golf selon la revendication 11, caractérisée en ce que les deux morceaux (72a, b) de l'axe de frein sont respectivement reliés de façon solidaire en rotation à un bras de levier (71a, b) et sont accouplés l'un à l'autre au moyen d'un morceau d'axe (70) monté de façon lâche de telle manière que pour compenser l'usure irrégulière des freins les morceaux (72a, b) de l'axe de frein puissent prendre des angles de rotation différents lors de l'actionnement des freins.

13. Voiture de golf selon l'une des revendications précédentes caractérisée en ce que sur la partie supérieure (2'') du guidon on prévoit un organe de commande (16) servant à commander le moteur électrique (18).

14. Voiture de golf selon l'une des revendications précédentes caractérisée par une électronique de commande avec un circuit de blocage en cas de décharge profonde, au moyen duquel on interrompt l'alimentation du courant quand la tension de la batterie (10) atteint une tension minimum prédéfinie.
